# EUROPÄISCHE PATENTSCHRIFT

(11) **EP 2 632 782 B1**
(45) Veröffentlichungstag und Bekanntmachung des Hinweises auf die Patenterteilung: **28.06.2017**
(21) Anmeldenummer: 11754646.5
(22) Anmeldetag: 01.09.2011
(51) Int. Cl.: B60T 8/88, B60T 8/48

(54) **STEUERVORRICHTUNG UND VERFAHREN ZUM BETREIBEN EINES MIT EINER ELEKTRISCHEN ANTRIEBS- UND/ODER GENERATORVORRICHTUNG AUSGESTATTETEN BREMSSYSTEMS**
CONTROL DEVICE AND METHOD FOR OPERATING A BRAKING SYSTEM EQUIPPED WITH AN ELECTRICAL DRIVE DEVICE AND/OR GENERATOR DEVICE
DISPOSITIF DE COMMANDE ET PROCÉDÉ DE FONCTIONNEMENT D'UN SYSTÈME DE FREINAGE ÉQUIPÉ D'UN DISPOSITIF D'ENTRAÎNEMENT ET/OU GÉNÉRATEUR ÉLECTRIQUE

(30) Priorität: 27.10.2010 DE 102010042995
(43) Veröffentlichungstag der Anmeldung: 04.09.2013
(73) Patentinhaber: Robert Bosch GmbH, 70442 Stuttgart (DE)
(72) Erfinder: STRENGERT, Stefan, 70469 Stuttgart (DE); KUNZ, Michael, 71711 Steinheim An Der Murr (DE); HAEGELE, Niccolo, 71665 Vaihingen/Enz (DE); QUIRANT, Werner, 71717 Beilstein (DE); KOLARSKY, Jens, 74321 Bietigheim/Bissingen (DE)
(86) Internationale Anmeldenummer: PCT/EP2011/065107
(87) Internationale Veröffentlichungsnummer: WO 2012/055616

(56) Entgegenhaltungen:
- JP-A- 2001 268 703
- US-A1- 2006 131 956
- US-A1- 2010 222 978

## Beschreibung

Die Erfindung betrifft eine Steuervorrichtung für ein mit einer elektrischen Antriebs- und/oder Generatorvorrichtung ausgestattetes Bremssystem. Des Weiteren betrifft die Erfindung ein Verfahren zum Betreiben eines mit einer elektrischen Antriebs- und/oder Generatorvorrichtung ausgestatteten Bremssystems.

### Stand der Technik

Ein Bremssystem eines Kraftfahrzeugs verfügt in der Regel über zwei Bremskreise mit jeweils zwei Bremszylindern (Radbremszylindern). Bei einem Fahrzeug mit einer achsweisen Bremskreisaufteilung sind die beiden Bremszylinder jedes Bremskreises den Rädern einer gemeinsamen Achse zugeordnet. Demgegenüber sind bei einer X-Bremskreisaufteilung ein erster Bremszylinder eines Bremskreises einem Vorderrad und ein zweiter Bremszylinder des gleichen Bremskreises einem Hinterrad zugeordnet.

Ein Fahrzeug mit einer gleichmäßigen oder einer hinterachslastigen Verteilung des Fahrzeuggewichts kann mit einem Bremssystem mit einer achsweisen Bremskreisaufteilung ausgestattet werden. Der bei einem Hybrid- oder Elektrofahrzeug anzubringende Generator, die zusammenwirkende Batterie und die zusätzliche Elektronik steigern jedoch häufig das Gesamtgewicht des Fahrzeugs und/oder führen zu einer ungleichmäßigeren Gewichtsverteilung am Fahrzeug. Ein Fahrzeug mit einem vergleichsweise hohen Vorderachslastanteil wird jedoch herkömmlicher Weise nicht mit einem achsweisen Bremssystem ausgerüstet, damit auch bei einem Ausfall eines Bremskreises noch eine gute Mindestverzögerung des Fahrzeugs realisierbar ist. Ein Fahrzeug mit einer X-Bremskreisaufteilung und mindestens einem Generator ist beispielsweise in der DE 10 2007 036 260 A1 beschrieben.

Steuersysteme und Verfahren zum Ansteuern eines mit einer elektrischen Antriebs- und/oder Generatorvorrichtung ausgestatteten Bremssystems sind auch in der US 2006/131956 A1, in der US 2010/222978 A1 und in der JP 2001 268703 A beschrieben.

### Offenbarung der Erfindung

Die Erfindung schafft eine Steuervorrichtung für ein mit einer elektrischen Antriebs- und/oder Generatorvorrichtung ausgestattetes Bremssystem mit den Merkmalen des Anspruchs 1 und ein Verfahren zum Betreiben eines mit einer elektrischen Antriebs- und/oder Generatorvorrichtung ausgestatteten Bremssystems mit den Merkmalen des Anspruchs 9.

### Vorteile der Erfindung

Die vorliegende Erfindung gewährleistet eine Steuervorrichtung und ein Verfahren zum Erkennen einer Funktionsbeeinträchtigung mindestens eines Bremskreises eines Bremssystems des Fahrzeugs und zum Ausgleichen/Überbrücken der erkannten Funktionsbeeinträchtigung des mindestens einen Bremskreises durch Aufbringen eines zusätzlichen Bremsmoments und/oder eines das Fahrzeug abbremsende Antriebsmoments mittels der elektrischen Antriebs- und/oder Generatorvorrichtung. Durch das vorteilhafte Festlegen des Soll-Modus und das Steuern der elektrischen Antriebs- und/oder Generatorvorrichtung in den festgelegten Soll-Modus kann die elektrische Antriebs- und/oder Generatorvorrichtung so eingesetzt werden, dass die Funktionsbeeinträchtigung des mindestens einen Bremskreises, insbesondere auch ein Funktionsausfall des mindestens einen Bremskreises, kompensiert bzw. reduziert wird. Damit gewährleistet die vorliegende Erfindung ein sicheres Abbremsen des Fahrzeugs auch bei einer signifikanten Funktionsbeeinträchtigung des mindestens einen Bremskreises.

In einer vorteilhaften Ausbildungsform der Steuervorrichtung ist mittels der Steuereinrichtung zusätzlich ein Soll-Modus der elektrischen Antriebs- und/oder Generatorvorrichtung zumindest unter Berücksichtigung der empfangenen Vorgabe-Größe und der empfangenen Ist-Größe festlegbar, in welchem ein Generator-Bremsmoment mittels der elektrischen Antriebs- und/oder Generatorvorrichtung auf mindestens eine Rad und/oder mindestens eine Achse ausübbar ist. Insbesondere kann der Soll-Modus unter Berücksichtigung einer Abweichung der empfangenen Vorgabe-Größe von der empfangenen Ist-Größe festlegbar sein. Das von der elektrischen Antriebs- und/oder Generatorvorrichtung ausgeübte Generator-Bremsmoment kann somit dem ausgefallenen hydraulischen Bremsmoment des in seiner Funktionsfähigkeit beeinträchtigten Bremskreises entsprechen.

Als Alternative oder als Ergänzung dazu kann mittels der Steuereinrichtung zusätzlich ein Soll-Modus der elektrischen Antriebs- und/oder Generatorvorrichtung zumindest unter Berücksichtigung der empfangenen Vorgabe-Größe und der empfangenen Ist-Größe festlegbar sein, in welchem ein einer aktuellen Fahrzeugsbewegungsrichtung des Fahrzeugs entgegen gerichtetes Antriebsmoment mittels der elektrischen Antriebs- und/oder Generatorvorrichtung auf das mindestens eine Rad und/oder die mindestens eine Achse ausübbar ist. Somit gewährleistet die vorliegende Erfindung eine weitere Möglichkeit zur Steigerung der Bremswirkung durch die Verwendung des elektrischen Motors und/oder des Generators in einem der Fahrzeugbewegungsrichtung entgegen gesetzen Motorbetrieb. Auch beim Festlegen des Soll-Modus mit dem der Fahrzeugsbewegungsrichtung entgegen gerichteten Antriebsmoment kann die Abweichung der empfangenen Vorgabe-Größe von der empfangenen Ist-Größe berücksichtigt werden. Somit ist auch in diesem Soll-Modus eine vorgegebene Gesamt-Fahrzeugverzögerung einhaltbar.

Außerdem umfasst die Steuervorrichtung zusätzlich eine dritte Empfangseinrichtung, welche derart ausgelegt ist, dass mittels der dritten Empfangseinrichtung eine Ladezustand-Größe einer der elektrischen Antriebs- und/oder Generatorvorrichtung zugeordneten Batterie empfangbar ist. Des Weiteren umfasst die Steuervorrichtung zusätzlich eine Vergleichseinrichtung, welche derart ausgelegt ist, dass mittels der Vergleichseinrichtung die empfangene Ladezustand-Größe mit einem vorgegebenen Schwellwert vergleichbar ist. Die Einsetzbarkeit eines Generators und/oder einer elektrischen Antriebsvorrichtung hängt oft von dem Ladezustand der damit verbundenen Batterie ab. Durch das Empfangen der Ladezustand-Größe und das Vergleichen der empfangenen Ladezustand-Größe mit dem vorgegebenen Schwellwert können der Generator und/oder die elektrische Antriebsvorrichtung gezielt dem Ladezustand der Batterie angepasst eingesetzt werden. Beispielsweise ist das Einsetzen des Generators bei einem Vorliegen der Batterie in einem nahezu entladenen Zustand besonders vorteilhaft. Demgegenüber können bei einem Einsetzen des Generators trotz der voll aufgeladenen Batterie Funktionsbeeinträchtigungen des Generators auftreten. Auch ein verlässliches Einsetzen der elektrischen Antriebsvorrichtung ist in der Regel nur gewährleistet, sofern die dazu notwendige Energie auf der Batterie gespeichert ist. Mittels der in diesem Absatz beschriebenen Weiterbildung ist die vorteilhafte Einsetzbarkeit der elektrischen Antriebs- und/oder Generatorvorrichtung jedoch auf einfache Weise realisierbar.

Sofern die Ladezustand-Größe über dem vorgegebenen Schwellwert liegt, ist ein Aktivierungssignal mittels der Vergleichseinrichtung an mindestens eine Heiz- und/oder Kühlvorrichtung ausgebbar. Dies ist insbesondere vorteilhaft, sofern die Batterie des Hybrid- oder Elektrofahrzeugs im Moment des Bremskreisausfalls, insbesondere an der Vorderachse, nahezu komplett vollgeladen ist. Durch das zusätzliche Aktivieren mindestens eines elektrischen Verbrauchers mittels des durch die Vergleichseinrichtung realisierten Energiemanagementsystems kann verhindert werden, dass im Generatorbetrieb aufgrund der vollgeladenen Batterie keine oder nur eine eingeschränkte Bremswirkung erbracht wird. Man kann dies so umschreiben, dass der von der Vergleichseinrichtung zusätzlich generierte Energiebedarf eine höhere Energierückgewinnung mittels des Generators ermöglicht und damit eine höhere Bremswirkung des Generators gewährleistet.

Die mindestens eine Heiz- und/oder Kühlvorrichtung ist aus einem ersten Betriebsmodus in einen zweiten Betriebsmodus mit einem gegenüber dem ersten Betriebsmodus gesteigerten Stromverbrauch steuerbar. Eine Heiz- und/oder Kühlvorrichtung ist in der Regel ein Hochstromverbraucher, deren Systemreaktion/Aktivierung vom Fahrer erst nach einer gewissen Zeit wahrgenommen wird. Somit gewährleistet das vorteilhafte Energiemanagementsystem mittels der Vergleichseinrichtung ein dem Fahrer nicht beeinträchtigendes/nicht störendes schnelles Verbrauchen von Energie, wodurch eine höhere Bremswirkung des Generators realisierbar ist. Man kann dies auch als aktives Zuund Abschalten (ohne Fahreranforderung) von Hochstromverbrauchern bezeichnen. Eine vorteilhaft einsetzbare Heiz- und/oder Kühlvorrichtung kann beispielsweise eine Sitzheizung, eine Heckscheibenheizung und/oder eine Klimaanlage des Fahrzeugs sein.

In einer weiteren vorteilhaften Weiterbildung ist, sofern die Ladezustand-Größe unter dem vorgegebenen Schwellwert liegt, die Steuereinrichtung mittels der Vergleichseinrichtung in einen Generator-Aktiviermodus steuerbar, in welchem der Soll-Modus mit dem Generator-Bremsmoment mittels der Steuereinrichtung festlegbar ist, und, sofern die Ladzustand-Größe über dem vorgegebenen Schwellwert liegt, die Steuereinrichtung mittels der Vergleichseinrichtung in einen Antrieb-Aktiviermodus steuerbar, in welchem der Soll-Modus mit dem der aktuellen Fahrzeugbewegungsrichtung entgegen gerichteten Antriebsmoment mittels der Steuereinrichtung festlegbar ist. Man kann dies auch so umschreiben, dass bei einem niedrigen Ladezustand (State of Charge) der Batterie die elektrische Antriebs- und/oder Generatorvorrichtung in einem Generatorbetrieb gesteuert wird, während die elektrische Antriebs- und/oder Generatorvorrichtung bei einer (nahezu) voll geladenen Batterie im Motorbetrieb den von der Steuervorrichtung festgelegten Beitrag zur Bremsleistung erbringt. Somit kann die elektrische Antriebs- und/oder Generatorvorrichtung bei dieser Weiterbildung der Erfindung unter Berücksichtigung des aktuellen Ladezustands der Batterie vorteilhaft eingesetzt werden.

Vorzugsweise sind zumindest ein erstes Sensorsignal eines Bremswegsensors und/oder eines Bremskraftsensors als die Vorgabe-Größe und zumindest ein zweites Sensorsignal mindestens eines Drucksensors des mindestens einen Bremskreises als die Ist-Größe empfangbar. Die empfangenen Sensorsignale sind anschließend auf die oben schon beschriebene Weise mittels der Steuereinrichtung zum Festlegen des vorteilhaften Soll-Modus auswertbar. Ein Fahrzeug, insbesondere ein Hybrid- oder ein Elektrofahrzeug, weist in der Regel einen Bremswegsensor (Pedalwegsensor) oder einen Bremskraftsensor (Pedalkraftsensor) auf. Auch mindestens ein Drucksensor ist herkömmlicher Weise bereits an einem Bremskreis eines Bremssystems vorhanden. Die vorliegende Erfindung gewährleistet somit eine Bremskreis-Ausfallerkennung unter Verwendung von bereits am Fahrzeug vorhandenen Komponenten. Außerdem kann die Erkennung eines Kreisausfalls auf einfache Weise erfolgen, wenn das erste Sensorsignal eine Bremsbetätigung anzeigt, jedoch aufgrund des zweiten Sensorsignals kein Druckaufbau am Drucksensor feststellbar ist. Das Auswerten der Sensorsignale zur vorteilhaften Bremskreis-Ausfallerkennung ist somit mittels einer kostengünstigen Elektronik ausführbar.

Die oben beschriebenen Vorteile sind auch bei einem Bremssystem mit einer entsprechend ausgebildeten Steuervorrichtung und mindestens einem Bremskreis mit mindestens einem Radbremszylinder gewährleistet. Insbesondere kann das Bremssystem mindestens zwei Bremskreise mit jeweils zwei einer gemeinsamen Räderachse zugeordneten Radbremszylindern umfassen.

Somit gewährleistet die vorliegende Erfindung eine Möglichkeit, zusätzlich zu dem Bremsmoment des in seiner Funktionsfähigkeit noch nicht beeinträchtigten Bremskreises ein weiteres Verzögerungselement mittels der elektrischen Antriebs- und/oder Generatorvorrichtung auf das mindestens eine Rad des Fahrzeugs auszuüben. Das dabei aufbringbare Verzögerungselement ist groß genug, um auch den Ausfall eines Bremskreises der Vorderachse eines Fahrzeugs mit einer hohen Vorderachslast und einer achsweisen Bremskreisaufteilung zu kompensieren. Mittels der vorliegenden Erfindung ist somit auch für ein Fahrzeug mit einer hohen Vorderachslast und einer achsweisen Bremskreisaufteilung ein hoher Sicherheitsstandart realisierbar.

Durch das Einsetzen der vorliegenden Erfindung entfällt damit die Notwendigkeit einer X-Bremskreisaufteilung bei einem Fahrzeug mit einer hohen Vorderachslast. Deshalb kann eine achsweise Bremskreisaufteilung trotz des zusätzlichen Gewichts des Generators, der Batterie und der zusätzlichen Elektronik, sowie der damit verbundenen Gewichtsumverteilung, auch in einem Hybrid- und in einem Elektrofahrzeug eingesetzt werden. Dies ist mit dem Vorteil verbunden, dass achsweise aufgeteilte Bremssysteme in der Regel eine höhere rekuperative Effizienz bei deutlich geringeren Kosten aufweisen als vergleichbare Bremssysteme mit einer X-Bremskreisaufteilung. Zusätzlich ist ein achsweise aufgeteiltes Bremssystem mit einem geringeren Arbeitsaufwand mit einem Generator ausstattbar. Ebenso erfordern Bremssysteme mit einer achsweisen Bremskreisaufteilung einen deutlich geringern Aufwand bei einer Verblendung.

Außerdem erleichtert die vorliegende Erfindung einem Fahrzeughersteller die Ausstattung einer Vielzahl von unterschiedlichen Fahrzeugtypen mit einem Bremssystem. Dies gilt insbesondere, sofern verschiedene Fahrzeugkonzepte aus einer Fahrzeugplattform bedient werden, um Kosten und Aufwand für die Entwicklung zu reduzieren. Innerhalb einer Fahrzeugplattform treten häufig Fahrzeugkonzepte mit unterschiedlichsten Gewichtsverteilungen auf. Mittels der vorliegenden Erfindung können jedoch alle Fahrzeugkonzepte unabhängig von ihrer Gewichtsverteilung mit einem Bremssystem aufweisend eine achsweise Bremskreisaufteilung ausgestattet werden. Herkömmlicher Weise ist es notwendig, Bremssysteme mit unterschiedlichen Bremskreisaufteilungen in einer Fahrzeugplattform auszubilden oder in verschiedenen Fahrzeugplattformen die X-Bremskreisaufteilung einzusetzen. Dies ist jedoch aufgrund der vorliegenden Erfindung nicht mehr notwendig. Damit entfällt der herkömmlicher Weise aufzubringende erhöhte Aufwand bei der Produktion und der Absicherung der unterschiedlichen Varianten der Fahrzeuge.

Der Einsatz der vorliegenden Erfindung bei einem Hybrid- oder einem Elektrofahrzeug vermeidet die herkömmlicher Weise notwendige Umstellung der Bremskreisaufteilung innerhalb einer Fahrzeugplattform in Abhängigkeit von der jeweiligen Gewichtsverteilung.

Stattdessen kann unter Verwendung der vorliegenden Erfindung unabhängig von der jeweiligen Gewichtsverteilung immer eine achsweise Bremskreisaufteilung eingesetzt werden. Die Variantenvielfalt, der Produktionsaufwand und damit die Kosten können bei der Fahrzeugherstellung somit deutlich gesenkt werden.

Eine weitere Möglichkeit zum Realisieren der oben beschriebenen Vorteile ist eine entsprechende Weiterbildung des Verfahrens zum Betreiben eines mit einer elektrischen Antriebs- und/oder Generatorvorrichtung ausgestatteten Bremssystems.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Steuervorrichtung;
- Fig. 2: eine schematische Darstellung einer Ausführungsform des Bremssystems; und
- Fig. 3: ein Flussdiagramm zum Darstellen einer Ausführungsform des Verfahrens zum Betreiben eines mit einer elektrischen Antriebs- und/oder Generatorvorrichtung ausgestatteten Bremssystems.

### Ausführungsformen der Erfindung

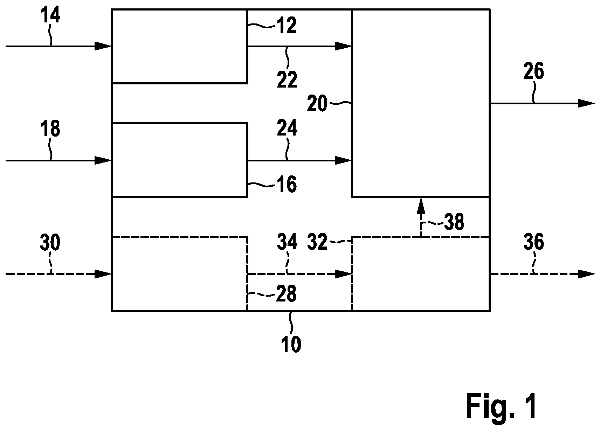

Fig. 1 zeigt eine schematische Darstellung einer Ausführungsform der Steuervorrichtung.

Mittels der in Fig. 1 schematisch wiedergegebenen Steuervorrichtung 10 kann ein Bremssystem mit einer elektrischen Antriebs- und/oder Generatorvorrichtung betrieben werden. Unter der elektrischen Antriebs- und/oder Generatorvorrichtung kann ein Generator und/oder ein elektrischer Antriebsmotor verstanden werden. Insbesondere kann die elektrische Antriebs- und/oder Generatorvorrichtung sowohl als Generator zum Aufladen einer Batterie als auch als Antriebsmotor zum Beschleunigen des damit ausgestatteten Fahrzeugs unter Verbrauch einer von der Batterie bereitgestellten Energie ausgebildet sein. Die Steuervorrichtung 10 ist nicht auf das Zusammenwirken eines bestimmten Typs eines Generators und/oder eines elektrischen Antriebsmotors beschränkt.

Die Steuervorrichtung 10 weist eine erste Empfangseinrichtung 12 auf, mittels welcher eine Vorgabe-Größe 14 bezüglich eines (Soll-)Bremsdrucks in mindestens einem Radbremszylinder mindestens eines Bremskreises eines Bremssystems des mit der Steuervorrichtung 10 ausgestatteten Fahrzeugs empfangbar ist. Die Vorgabe-Größe 14 kann beispielsweise eine Information bezüglich einer Betätigung eines Bremseingabeelements des Fahrzeugs durch einen Fahrer, wie insbesondere eine Bremskraft-Größe und/oder eine Bremsweg-Größe, umfassen. Beispielsweise kann die Vorgabe-Größe 14 zumindest ein erstes Sensorsignal eines Bremswegsensors (Pedalwegsensors) und/oder eines Bremskraftsensors (Pedalkraftsensors) umfassen. Da ein Bremswegsensor und/oder ein Bremskraftsensor herkömmlicher Weise bereits an einem Fahrzeug verbaut sind, kann die Steuervorrichtung 10 somit eingesetzt werden, ohne dass weitere mit ihr zusammenwirkende Sensoren zusätzlich am Fahrzeug einzusetzen sind. Die Vorgabe-Größe ist jedoch nicht auf die hier beschriebenen Beispiele beschränkt.

Mittels einer zweiten Empfangseinrichtung 16 der Steuervorrichtung 10 ist eine Ist-Größe 18 bezüglich eines (aktuell vorliegenden) Drucks in dem mindestens einen Bremskreis und/oder eines (aktuell vorliegenden) Bremsdrucks in dem mindestens einen Radbremszylinder des mindestens einen Bremskreises empfangbar. Insbesondere kann mindestens ein zweites Sensorsignal mindestens eines Drucksensors, welcher an mindestens einen Bremskreis des Bremssystems angebunden ist, als Ist-Größe 18 empfangbar sein. Somit kann auch zum Ermitteln der Ist-Größe 18 ein in der Regel am Fahrzeug bereits verbauter Sensor eingesetzt werden. Anstelle eines Drucksignals oder zusätzlich zu einem Drucksignal kann die Ist-Größe 18 jedoch auch ein anderes Sensorsignal umfassen.

Die Steuervorrichtung 10 umfasst auch eine Steuereinrichtung 20, an welche ein erstes Ausgabesignal 22 entsprechend der Vorgabe-Größe 14 von der ersten Empfangseinrichtung 12 und ein zweites Ausgabesignal 24 entsprechend der Ist-Größe 18 von der zweiten Empfangseinrichtung 16 bereitgestellt werden. Die Steuereinrichtung 20 ist derart ausgelegt, dass mittels der Steuereinrichtung 20 ein Soll-Modus der (nicht skizzierten) elektrischen Antriebs- und/oder Generatorvorrichtung unter Berücksichtigung der empfangenen Vorgabe-Größe 14 und der empfangenen Ist-Größe 18, bzw. der Ausgabesignale 22 und 24, festlegbar ist. Bevorzugter Weise legt die Steuereinrichtung 20 den Soll-Modus der elektrischen Antriebs- und/oder Generatorvorrichtung unter Berücksichtigung eines Vergleichs/einer Auswertung der empfangenen Vorgabe-Größe 14 von der empfangenen Ist-Größe 18, bzw. der Ausgabesignale 22 und 24, fest. Mittels eines dem festgelegten Soll-Modus entsprechenden Steuersignals 26 wird die elektrische Antriebs- und/oder Generatorvorrichtung anschließend in den festgelegten Soll-Modus gesteuert.

Beispielsweise kann mittels der Steuereinrichtung 20 ein Soll-Modus der elektrischen Antriebs- und/oder Generatorvorrichtung zumindest unter Berücksichtigung der empfangenen Vorgabe-Größe 14 und der empfangenen Ist-Größe 18 festlegbar sein, in welchem ein Generator-Bremsmoment, vorteilhafter Weise entsprechend einer Abweichung der empfangenen Vorgabe-Größe 14 von der empfangenen Ist-Größe 18, mittels der elektrischen Antriebs- und/oder Generatorvorrichtung auf mindestens ein Rad und/oder mindestens eine Achse des Fahrzeugs ausübbar ist. Dieses vorteilhafte Festlegen des Soll-Modus ist realisierbar durch ein einfach ausführbares Vergleichen der Größen 14 und 18, bzw. der Ausgabesignale 22 und 24. Die elektrische Antriebs- und/oder Generatorvorrichtung erbringt nach dem Ansteuern mittels des Steuersignals 26 als Generator die von der Steuereinrichtung 20 geforderte Bremsleistung im Generatorbetrieb unabhängig von einem Vorliegen oder Nichtvorliegen der Funktionsfähigkeit der Bremskreise des Bremssystems. Dies gilt sowohl für die Funktionsfähigkeit des Vorderachsen-Bremskreises als auch für die Funktionsfähigkeit des Hinterachsen-Bremskreises. Das Einsetzen der elektrischen Antriebs- und/oder Generatorvorrichtung als Generator ist zusätzlich mit dem Vorteil verbunden, dass auch bei einem Vorliegen der Fahrzeugbatterie in einem nahezu entladenen Zustand ein verlässliches Abbremsen des Fahrzeugs gewährleistbar ist.

Als Alternative oder wahlweise dazu kann mittels der Steuereinrichtung 20 auch ein Soll-Modus der elektrischen Antriebs- und/oder Generatorvorrichtung zumindest unter Berücksichtigung der empfangenen Vorgabe-Größe 14 und der empfangenen Ist-Größe 18 festlegbar sein, in welchem ein einer aktuellen Fahrzeugbewegungsrichtung des Fahrzeugs entgegen gerichtetes Antriebsmoment mittels der elektrischen Antriebs- und/oder Generatorvorrichtung auf mindestens ein Rad und/oder mindestens eine Achse ausübbar ist. In diesem Fall wird die elektrische Antriebs- und/oder Generatorvorrichtung als elektrischer Antriebsmotor aktiv so angesteuert, dass ein Antriebsmoment entgegen der aktuellen Bewegungsrichtung des Fahrzeugs erzeugt wird. Da zum Erzeugen des Antriebmoments Energie benötigt wird, ist dieser Vorgang mit einem Entladen der Fahrzeugbatterie verbunden. Das Erzeugen des Antriebsmoments entgegen der aktuellen Bewegungsrichtung des Fahrzeugs ist somit auch bei einer vollständig geladenen Fahrzeugbatterie ausführbar. Ein zusätzliches/künstliches Entladen der Fahrzeugbatterie ist somit bei dem Erzeugen des Antriebmoments nicht erforderlich. Außerdem ist auch das Erzeugen des Antriebmoments unabhängig von einem Vorliegen oder Nichtvorliegen der Funktionsfähigkeit der Bremskreise des Bremssystems ausführbar.

Das Aktivieren der elektrische Antriebs- und/oder Generatorvorrichtung als Generator und/oder als elektrische Antriebsvorrichung mittels der Steuervorrichtung 20 gewährleistet auf einfache Weise eine deutliche Steigerung des erzeugbaren Gesamt-Bremsmoments. Die Steuereinrichtung 20 ist aufgrund ihrer oben beschriebenen Auslegung insbesondere auch dazu ausgelegt, durch den Vergleich/der Auswertung der Größen 14 und 18, bzw. der Ausgabesignale 22 und 24, eine Funktionsbeeinträchtigung oder einen Ausfall eines Bremskreises, bezüglich welchem die Größen 14 und 18 empfangen werden, zu erkennen. Wird ein Bremskreisausfall von der Steuereinrichtung 20 erkannt, so kann die Steuereinrichtung 20 einen Soll-Modus der elektrischen Antriebs- und/oder Generatorvorrichtung festlegen, in welchem diese als zusätzlicher Bremsaktuator fungiert. Insbesondere kann die Steuereinrichtung 20 durch das Festlegen des Soll-Modus und Ausgeben des Steuersignals 26 die elektrischen Antriebs- und/oder Generatorvorrichtung so ansteuern, dass das entfallene hydraulische Bremsmoment des in seiner Funktionsweise beeinträchtigten und/oder ausgefallenen Bremskreises kompensierbar ist.

Die Steuervorrichtung 10 hat zusätzlich eine dritte Empfangseinrichtung 28, mittels welcher eine Ladezustand-Größe 30 einer (nicht dargestellten) Batterie, welche mit der elektrischen Antriebs- und/oder Generatorvorrichtung verbunden ist, empfangbar ist. Außerdem umfasst die Steuervorrichtung 10 auch eine Vergleichseinrichtung 32, mittels der ein drittes Ausgabesignal 34 der dritten Empfangseinrichtung entsprechend der Ladezustand-Größe 30 mit einem vorgegebenen Schwellwert vergleichbar ist. Die Ausstattung der Steuervorrichtung 10 mit den Einrichtungen 28 und 32 ist mit Vorteil verbunden, dass ein effizienteres Einsetzen der elektrischen Antriebs- und/oder Generatorvorrichtung unter Berücksichtigung des Ladezustands der Batterie realisierbar ist.

Die Vergleichseinrichtung 32 gibt nach einem Erkennen, dass die Ladezustand-Größe 30, bzw. das dritte Ausgabesignal 34, über dem vorgegebenen Schwellwert liegt, ein Aktivierungssignal 36 an mindestens einen fahrzeugeigenen Stromverbraucher aus. Mittels des Aktivierungssignals 36 ist mindestens eine Heiz- und/oder Kühlvorrichtung aus einem ersten Betriebsmodus in einen zweiten Betriebsmodus mit einem gegenüber dem ersten Betriebsmodus gesteigerten Stromverbrauch steuerbar sein. Bevorzugter Weise wird das Aktivierungssignal 36 an mindestens einen Hochstromverbraucher, wie beispielsweise eine Sitzheizung, eine Heckscheibenheizung und/oder eine Klimaanlage ausgegeben. Da der Fahrer eine Aktivierung eines derartigen (Hoch-)Stromverbrauchers in der Regel erst nach einer bestimmten Zeit bemerkt, ist somit ein (kurzzeitiges) Teil-Entladen der Fahrzeugbatterie ausführbar, ohne dass dies mit einer Komforteinbuße für den Fahrer verbunden ist. Durch das schnelle Teil-Entladen der Fahrzeugbatterie ist die Bremswirkung des Generators gegenüber einer Generator-Bremswirkung bei vollständig aufgeladener Fahrzeugbatterie steigerbar.

In einer weiteren bevorzugten Ausführungsform gibt die Vergleichseinrichtung 32 ein Schaltsignal 38 abhängig von einem Vergleich des vorgegebenen Schwellwerts mit der Ladezustand-Größe 30, bzw. dem dritten Ausgabesignal 34, an die Steuereinrichtung 20 aus. Vorteilhafter Weise wird die Steuereinrichtung 20 durch das Schaltsignal 38 bei einer Ladezustand-Größe 30 unter dem vorgegebenen Schwellwert, bzw. bei einem entsprechenden dritten Ausgabesignal 34, in einen Generator-Aktiviermodus geschaltet. In dem Generator- Aktiviermodus ist die Steuereinrichtung 20 dazu ausgelegt, einen Soll-Modus mit einem Generator-Bremsmoment, vorzugsweise entsprechend der Abweichung der empfangenen Vorgabe-Größe 14 von der empfangenen Ist-Größe 18, festzulegen. Man kann dies auch so beschreiben, dass bei einem niedrigen Ladezustand der Batterie die elektrische Antriebs- und/oder Generatorvorrichtung von der Steuereinrichtung 20 zum Gewährleisten der zusätzlichen Fahrzeugverzögerung als Generator aktivierbar ist.

Sofern die Ladezustand-Größe 30, bzw. das dritte Ausgabesignal 34, über dem vorgegebenen Schwellwert liegt, wird die Steuereinrichtung 20 bevorzugter Weise mittels des Schaltsignals 38 in einen Antrieb-Aktiviermodus geschaltet. In dem Antrieb-Aktiviermodus ist mittels der Steuereinrichtung 20 ein Soll-Modus mit einem der aktuellen Fahrzeugbewegungsrichtung entgegengerichteten Antriebsmoment festlegbar. Somit ist die elektrische Antriebs- und/oder Generatorvorrichtung von der in den Antriebs-Modus geschalteten Steuereinrichtung 20 so aktivierbar, dass sie als elektrischer Antriebsmotor ein der aktuellen Fahrzeugsbewegungsrichtung entgegengerichtetes Antriebsmoment auf mindestens ein Rad und/oder eine Achse des Fahrzeugs ausübt.

Durch das Schalten der Steuereinrichtung 20 in den Generator- Aktiviermodus oder in den Antrieb-Aktiviermodus unter Berücksichtigung der aktuellen Ladezustand-Größe 30 entfällt die Notwendigkeit eines Teil-Entladens der Fahrzeugbatterie durch Aktivieren eines fahrzeugeigenen Stromverbrauchers. Gleichzeitig kann die elektrische Antriebs- und/oder Generatorvorrichtung in diesem Fall als Antriebsmotor oder als Generator so eingesetzt werden, dass ihre Funktion bezüglich des Ladezustands der Batterie optimiert ist.

In einer Weiterbildung kann der Schwellwert unter Berücksichtigung eines Zustands mindestens einer Fahrzeugkomponente und/oder einer Fahrweise des Fahrzeugs vorgegeben werden. Beispielsweise kann bei einer hohen Geschwindigkeit des Fahrzeugs ein anderer Schwellwert als bei einer niedrigen Geschwindigkeit des Fahrzeugs vorgegeben werden. Ebenso kann im Stadtverkehr bei einem häufigeren Abbremsen des Fahrzeugs und einem deshalb oft von dem Fahrer angeforderten Beschleunigen des Fahrzeugs der Schwellwert höher festgelegt werden als bei einer Fahrt auf der Landstraße.

Mindestens ein die Größe 14, 18 und/oder 30 bereitstellender Sensor kann als Untereinheit der Steuervorrichtung 10 ausgebildet sein. Unter einem Empfangen der mindestens einen Größe 14, 18 und/oder 30 kann somit auch das Annehmen eines von einem internen Sensor bereitgestellten Signals verstanden werden. Der mindestens eine Sensor zum Bereitstellen der Größe 14, 18 und/oder 30 kann jedoch auch getrennt von der Steuervorrichtung 10 angeordnet sein und beispielsweise über einen Fahrzeugbus mit dieser kommunizieren.

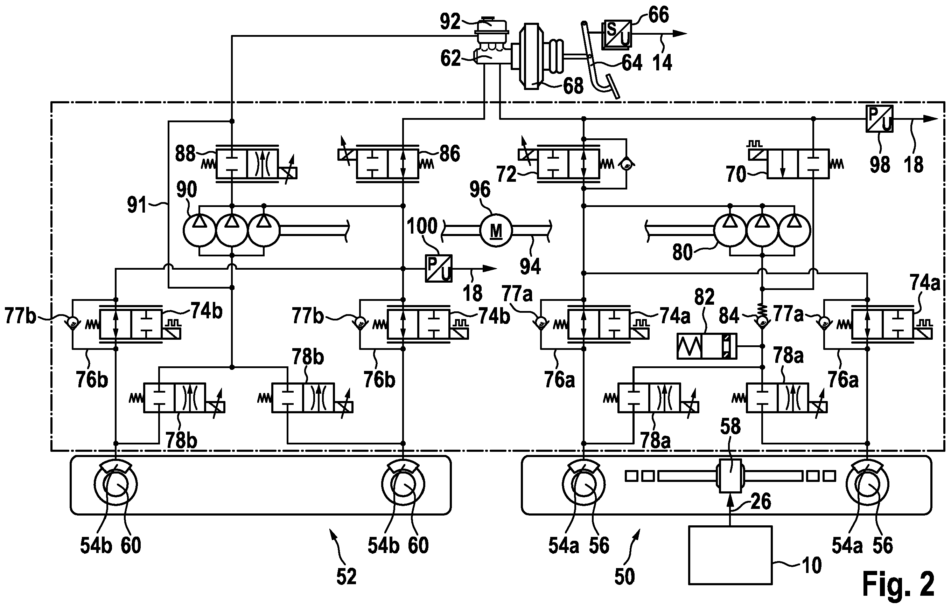

Fig. 2 zeigt eine schematische Darstellung einer Ausführungsform des Bremssystems.

Das mit der oben schon beschriebenen Steuervorrichtung 10 ausgestattete Bremssystem weist einen ersten Bremskreis 50 und einen zweiten Bremskreis 52 mit jeweils zwei Radbremszylindern 54a und 54b auf. Den beiden Radbremszylindern 54a des ersten Bremskreises 50 sind zwei an der Vorderachse angeordneten Rädern 56 zugeordnet. An der Vorderachse ist auch ein Generator 58 als elektrische Antriebs- und/oder Generatorvorrichtung, welcher mittels des Steuersignals 26 ansteuerbar ist, angeordnet.

Den beiden Radbremszylindern 54b des zweiten Bremskreises 52 sind Rädern 60 an der Hinterachse zugeordnet.

Das hier beschriebene Bremssystem gewährleistet trotz seiner achsweisen Bremskreisaufteilung und einer evtl. vorliegenden vorderachslastigen Verteilung des Fahrzeuggewichts den Sicherheitsstandard eines Bremssystems mit einer X-Bremskreisaufteilung selbst bei einem Auftreten einer Funktionsbeeinträchtigung oder einem Ausfall eines der beiden Bremskreise 50 oder 52.

Es wird ausdrücklich drauf hingewiesen, dass die im Weiteren beschriebenen Komponenten des Bremssystems lediglich ein Beispiel für eine mögliche Ausbildung des vorteilhaften Bremssystems mit der Steuervorrichtung 10 darstellen. Ein Vorteil des Bremssystems liegt vor allem darin, dass die Bremskreise 50 und 52 nicht auf eine bestimmte Ausbildung oder auf das Einsetzen bestimmter Komponenten festgelegt sind. Stattdessen können die Bremskreise 50 und 52 mit einer hohen Wahlfreiheit modifiziert werden, ohne dass die Vorteile der Ausstattung des Bremssystems mit der Steuervorrichtung 10 beeinträchtigt werden. Somit ist das Einsetzen der Komponenten 10 und 58 mit einer Vielzahl von Bremskreis-Komponenten und bei unterschiedlichen Ausbildungen der Bremskreise 50 und 52 möglich.

Das Bremssystem weist ein an einem Hauptbremszylinder 62 angeordnetes Bremseingabeelement 64, beispielsweise ein Bremspedal, auf. Zur Bereitstellung der Vorgabe-Größe 14 kann ein Bremswegsensor 66 an dem Bremseingabeelement 64 angeordnet sein. Als Alternative zu dem Bremswegsensor 66 kann auch ein Bremskraftsensor/Bremsdrucksensor eingesetzt werden. Optionaler Weise kann das Bremssystem auch einen Bremskraftverstärker 68, beispielsweise einen hydraulischen Bremskraftverstärker oder einen elektromechanischen Bremskraftverstärker, umfassen.

Der erste Bremskreis 50 ist mit einem Hauptschaltventil 70 und einem Umschaltventil 72 so ausgebildet, dass der Fahrer über den Hauptbremszylinder 62 direkt in die Radbremszylinder 54a des ersten Bremskreises 50 hineinbremsen kann. Jedem der beiden Radbremszylinder 54a des ersten Bremskreises 50 sind ein Radeinlassventil 74a mit einer parallel dazu verlaufenden Bypassleitung 76a, ein in jeder Bypassleitung 76a angeordnetes Rückschlagventil 77a und ein Radauslassventil 78a zugeordnet. Außerdem umfasst der erste Bremskreis 50 eine erste Pumpe 80, deren Ansaugseite mit den Radauslassventilen 78a verbunden ist und deren Förderseite zu dem Umschaltventil 72 gerichtet ist, eine zwischen den Radauslassventilen 78a und der Pumpe 80 angekoppelte Speicherkammer 82 und ein zwischen der ersten Pumpe 80 und der Speicherkammer 82 angeordnetes Überdruckventil 84.

Der zweite Bremskreis 52 ist als ein von dem Hauptbremszylinder 62 entkoppelbarer Bremskreis ausgebildet. Dazu weist der zweite Bremskreis 52 ein Trennventil 86 auf, mittels welchem die Radbremszylinder 54b des zweiten Bremskreises 52, die den Radbremszylindern 54b zugeordneten Radeinlassventile 74b mit parallel angeordneten Bypassleitungen 76b mit Rückschlagventilen 77b und die den Radbremszylinder 54b zugeordneten Radauslassventile 78b von dem Hauptbremszylinder 62 abkoppelbar sind. Über ein Schließen des Trennventils 86 kann verhindert werden, dass das Betätigen des Bremseingabeelements 64 eine Steigerung des Bremsdrucks in den Radbremszylindern 54b des zweiten Bremskreises 52 bewirkt. Dies ist insbesondere vorteilhaft, wenn zum Aufladen der (nicht dargestellten) Fahrzeugbatterie der Generator 58 während eines Abbremsvorgangs eingesetzt werden soll. Da der Generator 58 ein zusätzliches Generator-Bremsmoment auf das Fahrzeug ausübt, kann durch Entkoppeln der Radbremszylinder 54b des zweiten Bremskreises 52 verhindert werden, dass die Gesamt-Verzögerung des Fahrzeugs größer als eine von dem Fahrer vorgegebene Soll-Fahrzeugverzögerung ist.

Außerdem weist der zweite Bremskreis 52 ein stetig regelbares/verstellbares/steuerbares Ventil 88 und eine zweite Pumpe 90 auf. Das stetig regelbare Ventil 88 ist mit einem Bremsmediumreservoir 92 an dem Hauptbremszylinder 62 hydraulisch verbunden. Die Ansaugseite der zweiten Pumpe 90 ist ebenfalls mit dem Bremsmediumreservoir 92 über eine parallel zu dem stetig regelbaren Ventil 88 und der zweiten Pumpe 90 verlaufende Bypassleitung 91 hydraulisch so verbunden, dass nach einem Schließen des Trennventils 86 ein Bremsmediumvolumen mittels der zweiten Pumpe 90 über die (zumindest teilgeöffneten) Radeinlassventile 74b in die Radbremszylinder 54b des zweiten Bremskreises 52 pumpbar ist. Die Förderseite der zweiten Pumpe 90 ist über das stetig regelbare Ventil 88 so mit dem Bremsmediumreservoir 92 verbunden, dass nach dem Schließen des Trennventils 86 ein Bremsmediumvolumen aus den Radbremszylindern 54b des zweiten Bremskreises 52 über die (zumindest teilgeöffneten) Radauslassventile 78b und das (zumindest teilgeöffnete) stetig regelbare Ventil 88 in das Bremsmediumreservoir 92 pumpbar ist. Somit kann nach dem Schließen des Trennventils 86 das hydraulische Bremsmoment der Radbremszylinder 54b des zweiten Bremskreises 52 mittels der zweiten Pumpe 90 und dem stetig regelbaren Ventil 88 aktiv eingestellt werden. Insbesondere kann das hydraulische Bremsmoment der von dem Hauptbremszylinder 62 entkoppelten Radbremszylinder 54b des zweiten Bremskreises 52 entsprechend einer Differenz zwischen einem von dem Fahrer vorgegebenen Soll- Gesamtbremsmoment und einem Ist-Gesamtbremsmoment aus dem Generator-Bremsmoment des Generators 58 und dem hydraulischen Bremsmoment der Radbremszylinder 54a des ersten Bremskreises 50 eingestellt werden.

Die Pumpen 80 und 90 können jeweils als Drei-Kolben-Pumpen auf einer gemeinsamen Welle 94 eines Motors 96 angeordnet sein. Anstelle von Drei-Kolben-Pumpen sind jedoch auch andere Pumpentypen für die Pumpen 80 und 90 verwendbar.

Die in den oberen Absätzen beschriebenen Komponenten 70 bis 96 stellen lediglich Beispiele für eine Ausstattung eines Bremssystems mit einer entkoppelbaren Hinterachse dar. Die Ausbildung des Bremssystems ist nicht auf das dargestellte Modulationssystem beschränkt, sondern lässt sich auch auf andere denkbare Modulationssysteme übertragen. Anstelle einer achsweisen Bremskreisaufteilung kann das Bremssystem auch eine X-Bremskreisaufteilung aufweisen.

Jeder der beiden Bremskreise 50 und 52 weist einen Drucksensor 98 und 100 auf, mittels welchem die Ist-Größe 18 bereitstellbar ist. Die Steuervorrichtung 10 ist auf die oben schon beschriebene Weise dazu ausgelegt, anhand der bereitgestellten Größen 14 und 18 den Generator 58 mittels des Steuersignals 26 vorteilhaft anzusteuern.

Bei dem hier dargestellten Bremssystem kann der Fahrer trotz eines Kreisausfalls/einer Funktionsbeeinträchtigung des ersten Bremskreises 50 eine ausreichende Mindestverzögerung (von mindestens der gesetzlich vorgeschriebenen Mindestverzögerung) mittels eines vorteilhaft einstellbaren Bremsdrucks in den Radbremszylindern 54b des zweiten Bremskreises 52 und/oder dem mittels des Steuersignals 26 angesteuerten Generator 58 erreichen. Dazu wird mittels der Vorgabe-Größe 14 die Betätigung der Bremse, beispielsweise der resultierende messbare Bremsweg, an die Steuervorrichtung 10 ausgegeben. Ebenso erhält die Steuervorrichtung von mindestens einem der Drucksensoren 98 und 100 die Ist-Größe 18. Die Steuervorrichtung 10 ist dazu ausgelegt, die Vorgabe-Größe 14 mit der Ist-Größe 18 zu vergleichen/auszuwerten und einen anhand des Vergleichs/der Auswertung festgelegten Soll-Modus mittels des Steuersignals 26 an den Generator 58 zu kommunizieren.

Bei einer Funktionsbeeinträchtigung/einem Ausfall des zweiten Bremskreises 52 ist mittels der Steuervorrichtung 10 eine deutlich bessere Bremsleistung im Vergleich zu einem konventionellen Bremssystem mit X-Bremskreisaufteilung gewährleistbar. Während die Bremswirkung im konventionellen Bremssystem mit X-Bremskreisaufteilung im Falle einer Funktionsbeeinträchtigung/einem Ausfall des zweiten Bremskreises 52 mittels eines an einem Vorderrad angeordneten Radbremszylinders und eines einem Hinterrad zugeordneten Radbremszylinders erbracht wird, kann bei dem hier beschriebenen Bremssystem die Bremswirkung durch zumindest die beiden Radbremszylinder 54a des ersten Bremskreises 50 erzeugt werden. Aufgrund der beschriebenen höheren Achslast an der Vorderachse ist diese Bremswirkung bei dem hier beschriebenen Bremssystem größer als beim Stand der Technik mit X-Bremskreisaufteilung.

Das hier beschriebene Bremssystem mit einer achsweisen Bremskreisaufteilung und einer entkoppelbaren Hinterachse ist somit auch für Fahrzeuge geeignet, die bisher aufgrund ihrer Gewichtsverteilung eine X-Bremskreisaufteilung erforderten/notwendig machten. Insbesondere eignet sich das Bremssystem für ein Hybrid- oder Elektrofahrzeug. Es wird jedoch darauf hingewiesen, dass das hier beschriebene Bremssystem nicht nur auf eine Anwendung in einem Hybrid- oder in einem Elektrofahrzeug beschränkt ist. Stattdessen ist das hier beschriebene Bremssystem in allen Kraftfahrzeugen einsetzbar. Sofern mit dem Bremssystem mehr als vier Räder abbremsbar sein sollen, kann mindestens einer der beiden Bremskreise 50 oder 52 mehrmals in dem Bremssystem ausgebildet werden.

Das Einsetzten des von der Steuervorrichtung 10 aktivierten Generators 58 und/oder das aktive Einstellen des Bremsdrucks in den Radbremszylindern 54b des zweiten Bremskreises 52 mittels des stetig regelbaren Ventils 88 und der zweiten Pumpe 90 gewährleistet bei einer Funktionsbeeinträchtigung/einem Ausfall eines der beiden Bremskreise 50 und 52 eine frühzeitigere Bremswirkung als Antwort auf die Betätigung des Bremseingabeelements 64 durch den Fahrer im Vergleich zu herkömmlichen Bremssystemen mit einer X-Bremskreisaufteilung. Bei einem konventionellen Bremssystem verlängert sich im Falle eines Kreisausfalls der Betätigungsweg des Bremseingabeelements bis zur ersten spürbaren Bremsreaktion des Fahrzeugs aufgrund der sequenziellen Anordnung der Kammern des Hauptbremszylinders 62 deutlich. Häufig empfindet ein den deutlich verlängerten Betätigungsweg bemerkender Fahrer eines Fahrzeugs mit einem herkömmlichen Bremssystem deshalb einen Bremskreisausfall als kompletten Bremsausfall. Bei dem hier beschriebenen Bremssystem ist der bis zur ersten Bremsreaktion des Fahrzeugs zurückzulegende Bremsweg trotz eines Kreisausfalls aufgrund des frühzeitigen Erkennens der Betätigung des Bremseingabeelements 64 mittels des Bremswegsensors 66 (Pedalwegsensor) auf ein Minimum reduziert, welches unter dem Betätigungsweg des Bremseingabeelements eines herkömmlichen Bremssystems für eine erste spürbare Bremsreaktion liegt.

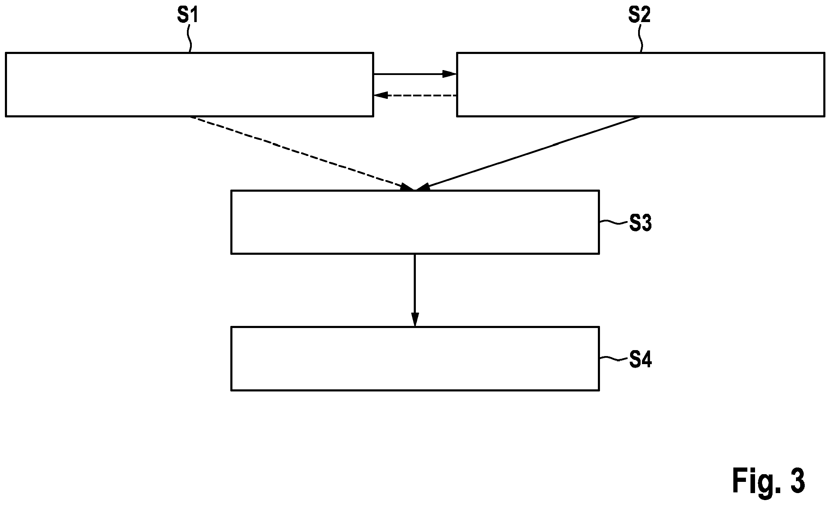

Fig. 3 zeigt ein Flussdiagramm zum Darstellen einer Ausführungsform des Verfahrens zum Betreiben eines mit einer elektrischen Antriebs- und/oder Generatorvorrichtung ausgestatteten Bremssystems.

Das im Weiteren beschriebene Verfahren ist beispielsweise mittels der oben beschriebenen Steuervorrichtung oder mittels des vorausgehend erläuterten Bremssystems ausführbar. Die Ausführbarkeit des hier beschriebenen Verfahrens ist jedoch nicht auf eine derartige Steuervorrichtung oder auf das Bremssystem beschränkt.

In einem Verfahrensschritt S1 wird eine Vorgabe-Größe bezüglich eines Bremsdrucks in mindestens einem Radbremszylinder mindestens eines Bremskreises des Bremssystems ermittelt. Der Verfahrensschritt S2 umfasst ein Ermitteln einer Ist-Größe bezüglich eines Drucks in dem mindestens einen Bremskreis und/oder des Bremsdrucks dem mindestens einen Radbremszylinder des mindestens einen Bremskreises. Beispiele für die ermittelte Vorgabe-Größe und die ermittelte Ist-Größe sind oben schon beschrieben. Die Verfahrensschritte S1 und S2 können in beliebiger Reihenfolge oder gleichzeitig ausgeführt werden.

In einem weiteren Verfahrensschritt S3 wird ein Soll-Modus der elektrischen Antriebs- und/oder Generatorvorrichtung festgelegt. Dies geschieht unter Berücksichtigung zumindest der ermittelten Vorgabe-Größe und der ermittelten Ist-Größe. Beispielsweise wird dazu die ermittelte Vorgabe-Größe mit der ermittelten Ist-Größe verglichen/ausgewertet. Als Ergänzung dazu kann der Soll-Modus in dem Verfahrensschritt S3 auf die oben schon beschriebene Weise auch unter zusätzlicher Berücksichtigung einer Ladezustand-Größe bezüglich eines Ladezustands einer mit der elektrischen Antriebs- und/oder Generatorvorrichtung verbundenen Batterie und eines vorgegebenen Schwellwerts festgelegt werden.

In einem nachfolgenden Verfahrensschritt S4 wird die elektrische Antriebs- und/oder Generatorvorrichtung in den festgelegten Soll-Modus gesteuert. Beispielsweise kann die elektrische Antriebs- und/oder Generatorvorrichtung in einen Soll-Modus mit einem Generator-Bremsmoment, vorzugsweise entsprechend einer Abweichung der empfangenen Vorgabe-Größe von der empfangenen Ist-Größe, gesteuert werden. Alternativ oder wahlweise dazu kann in dem Verfahrensschritt S4 auch die elektrische Antriebs- und/oder Generatorvorrichtung in einen Soll-Modus mit einem einer aktuellen Fahrzeugbewegungsrichtung des Fahrzeugs mit dem Bremssystem entgegen gerichteten Antriebsmoment gesteuert werden.

## Patentansprüche

1. Steuervorrichtung (10) für ein mit einer elektrischen Antriebs- und/oder Generatorvorrichtung (58) ausgestattetes Bremssystem mit:
einer ersten Empfangseinrichtung (12), welche derart ausgelegt ist, dass mittels der ersten Empfangseinrichtung (12) eine Vorgabe-Größe (14) bezüglich eines Bremsdrucks in mindestens einem Radbremszylinder (54a, 54b) mindestens eines Bremskreises (50, 52) des Bremssystems empfangbar ist;
einer zweiten Empfangseinrichtung (16), welche derart ausgelegt ist, dass mittels der zweiten Empfangseinrichtung (16) eine Ist-Größe (18) bezüglich eines Drucks in dem mindestens einen Bremskreis (50, 52) und/oder des Bremsdrucks in dem mindestens einen Radbremszylinder (54a, 54b) des mindestens einen Bremskreises (50, 52) empfangbar ist; und
einer Steuereinrichtung (20), welche derart ausgelegt ist, dass mittels der Steuereinrichtung (20) ein Soll-Modus der elektrischen Antriebs- und/oder Generatorvorrichtung (58) unter Berücksichtigung der empfangenen Vorgabe-Größe (14) und der empfangenen Ist-Größe (18) festlegbar ist, und ein entsprechendes Steuersignal (26) an die elektrische Antriebs- und/oder Generatorvorrichtung (58) ausgebbar ist, so dass die elektrische Antriebs- und/oder Generatorvorrichtung (58) mittels des Steuersignals (26) in den festgelegten Soll-Modus steuerbar ist,
wobei die Steuervorrichtung (10) zusätzlich eine dritte Empfangseinrichtung (28) umfasst, welche derart ausgelegt ist, dass mittels der dritten Empfangseinrichtung (28) eine Ladezustand-Größe (30) einer der elektrischen Antriebs- und/oder Generatorvorrichtung (58) zugeordneten Batterie empfangbar ist, und die Steuervorrichtung (10) zusätzlich eine Vergleichseinrichtung (32) umfasst, welche derart ausgelegt ist, dass mittels der Vergleichseinrichtung (32) die empfangene Ladezustand-Größe (30) mit einem vorgegebenen Schwellwert vergleichbar ist,
**dadurch gekennzeichnet, dass**
sofern die Ladezustand-Größe (30) über dem vorgegebenen Schwellwert liegt, ein Aktivierungssignal (36) mittels der Vergleichseinrichtung (32) an mindestens eine Heiz- und/oder Kühlvorrichtung ausgebbar ist, und die mindestens eine Heiz- und/oder Kühlvorrichtung mittels des Aktivierungssignals (36) aus einem ersten Betriebsmodus in einen zweiten Betriebsmodus mit einem gegenüber dem ersten Betriebsmodus gesteigerten Stromverbrauch steuerbar ist.

2. Steuervorrichtung (10) nach Anspruch 1, wobei mittels der Steuereinrichtung (20) zusätzlich ein Soll-Modus der elektrischen Antriebs- und/oder Generatorvorrichtung (58) zumindest unter Berücksichtigung der empfangenen Vorgabe-Größe (14) und der empfangenen Ist-Größe (18) festlegbar ist, in welchem ein Generator-Bremsmoment mittels der elektrischen Antriebs- und/oder Generatorvorrichtung (58) auf mindestens ein Rad (56, 60) und/oder mindestens eine Achse ausübbar ist.

3. Steuervorrichtung (10) nach Anspruch 1 oder 2, wobei mittels der Steuereinrichtung (20) zusätzlich ein Soll-Modus der elektrischen Antriebs- und/oder Generatorvorrichtung (58) zumindest unter Berücksichtigung der empfangenen Vorgabe-Größe (14) und der empfangenen Ist-Größe (18) festlegbar ist, in welchem ein einer aktuellen Fahrzeugbewegungsrichtung des Fahrzeugs mit dem Bremssystem entgegen gerichtetes Antriebsmoment mittels der elektrischen Antriebs- und/oder Generatorvorrichtung(58) auf das mindestens eine Rad (56, 60) und/oder die mindestens eine Achse ausübbar ist.

4. Steuervorrichtung (10) nach einem der vorhergehenden Ansprüche, wobei, sofern die Ladezustand-Größe (30) unter dem vorgegebenen Schwellwert liegt, die Steuereinrichtung (20) mittels der Vergleichseinrichtung (32) in einen Generator-Aktiviermodus steuerbar ist, in welchem der Soll-Modus mit dem Generator-Bremsmoment mittels der Steuereinrichtung (20) festlegbar ist, und, sofern die Ladezustand-Größe (30) über dem vorgegebenen Schwellwert liegt, die Steuereinrichtung (20) mittels der Vergleichseinrichtung (32) in einen Antriebs-Aktiviermodus steuerbar ist, in welchem der Soll-Modus mit dem der aktuellen Fahrzeugbewegungsrichtung entgegen gerichteten Antriebsmoment mittels der Steuereinrichtung (20) festlegbar ist.

5. Steuervorrichtung (10) nach einem der vorhergehenden Ansprüche, wobei zumindest ein erstes Sensorsignals eines Bremswegsensors (66) und/oder eines Bremskraftsensors als die Vorgabe-Größe (14) und zumindest ein zweites Sensorsignal mindestens eines Drucksensors (98, 100) des mindestens einen Bremskreises (50, 52) als die Ist-Größe (18) empfangbar sind.

6. Bremssystem mit:
einer elektrischen Antriebs- und/oder Generatorvorrichtung (58);
einer Steuervorrichtung (10) nach einem der vorhergehenden Ansprüche; und
mindestens einem Bremskreis (50, 52) mit mindestens einem Radbremszylinder (54a, 54b).

7. Bremssystem nach Anspruch 6, wobei das Bremssystem mindestens zwei Bremskreise (50, 52) mit jeweils zwei einer gemeinsamen Räderachse zugeordneten Radbremszylindern umfasst (54a, 54b).

8. Bremssystem nach Anspruch 7, wobei mittels der elektrischen Antriebs- und/oder Generatorvorrichtung (58) ein Generator-Bremsmoment und/oder ein Antriebsmoment auf eine Vorderachse eines Fahrzeugs ausübbar sind.

9. Verfahren zum Betreiben eines mit einer elektrischen Antriebs- und/oder Generatorvorrichtung (58) ausgestatteten Bremssystems mit den Schritten:
Ermitteln einer Vorgabe-Größe (14) bezüglich eines Bremsdrucks in mindestens einem Radbremszylinder (54a, 54b) mindestens eines Bremskreises (50, 52) des Bremssystems (S1);
Ermitteln einer Ist-Größe (18) bezüglich eines Drucks in dem mindestens einen Bremskreis (50, 52) und/oder des Bremsdrucks in dem mindestens einen Radbremszylinder (54a, 54b) des mindestens einen Bremskreises (50, 52) (S2);
Festlegen eines Soll-Modus der elektrischen Antriebs- und/oder Generatorvorrichtung (58) unter Berücksichtigung der ermittelten Vorgabe-Größe (14) und der ermittelten Ist-Größe (18) (S3); und
Steuern der elektrischen Antriebs- und/oder Generatorvorrichtung (58) in den festgelegten Soll-Modus (S4),
wobei eine Ladezustand-Größe (30) einer der elektrischen Antriebs- und/oder Generatorvorrichtung (58) zugeordneten Batterie mit einem vorgegebenen Schwellwert verglichen wird,
**gekennzeichnet durch** den Schritt, dass,
sofern die Ladezustand-Größe (30) über dem vorgegebenen Schwellwert liegt, ein Aktivierungssignal (36) an mindestens eine Heiz- und/oder Kühlvorrichtung ausgegeben wird, und die mindestens eine Heiz- und/oder Kühlvorrichtung mittels des Aktivierungssignals (36) aus einem ersten Betriebsmodus in einen zweiten Betriebsmodus mit einem gegenüber dem ersten Betriebsmodus gesteigerten Stromverbrauch gesteuert wird.

10. Verfahren nach Anspruch 9, wobei die elektrische Antriebs- und/oder Generatorvorrichtung (58) in einen Soll-Modus mit einem Generator-Bremsmoment gesteuert wird.

11. Verfahren nach Anspruch 9 oder 10, wobei die elektrische Antriebs- und/oder Generatorvorrichtung (58) in einen Soll-Modus mit einem einer aktuellen Fahrzeugbewegungsrichtung des Fahrzeugs mit dem Bremssystem entgegen gerichteten Antriebsmoment gesteuert wird.

## Claims

1. Control apparatus (10) for a brake system which is equipped with an electrical drive and/or generator apparatus (58), comprising:
a first receiving device (12) which is designed in such a way that a prespecification variable (14) relating to a brake pressure in at least one wheel brake cylinder (54a, 54b) of at least one brake circuit (50, 52) of the brake system can be received by means of the first receiving device (12);
a second receiving device (16) which is designed in such a way that an actual variable (18) relating to a pressure in the at least one brake circuit (50, 52) and/or the brake pressure in the at least one wheel brake cylinder (54a, 54b) of the at least one brake circuit (50, 52) can be received by means of the second receiving device (16); and
a control device (20) which is designed in such a way that a setpoint mode of the electrical drive and/or generator apparatus (58) can be defined by means of the control device (20) taking into account the received prespecification variable (14) and the received actual variable (18), and a corresponding control signal (26) can be output to the electrical drive and/or generator apparatus (58), so that the electrical drive and/or generator apparatus (58) can be controlled in the defined setpoint mode by means of the control signal (26),
wherein the control apparatus (10) additionally comprises a third receiving device (28) which is designed in such a way that a state of charge variable (30) of a battery which is associated with the electrical drive and/or generator apparatus (58) can be received by means of the third receiving device (28), and the control apparatus (10) additionally comprises a comparison device (32) which is designed in such a way that the received state of charge variable (30) can be compared with a prespecified threshold value by means of the comparison device (32),
**characterized in that**,
if the state of charge variable (30) lies above the prespecified threshold value, an activation signal (36) can be output to at least one heating and/or cooling apparatus by means of the comparison device (32), and the at least one heating and/or cooling apparatus can be adjusted from a first operating mode to a second operating mode with a power consumption level which is increased in relation to the first operating mode by means of the activation signal (36).

2. Control apparatus (10) according to Claim 1, wherein a setpoint mode of the electrical drive and/or generator apparatus (58) can additionally be defined by means of the control device (20) at least taking into account the received prespecification variable (14) and the received actual variable (18), in which setpoint mode a generator braking torque can be exerted on at least one wheel (56, 60) and/or at least one axle by means of the electrical drive and/or generator apparatus (58).

3. Control apparatus (10) according to Claim 1 or 2, wherein a setpoint mode of the electrical drive and/or generator apparatus (58) can additionally be defined by means of the control device (20) at least taking into account the received prespecification variable (14) and the received actual variable (18), in which setpoint mode a drive torque which is directed against a current movement direction of the vehicle comprising the brake system can be exerted on the at least one wheel (56, 60) and/or the at least one axle by means of the electrical drive and/or generator apparatus (58).

4. Control apparatus (10) according to one of the preceding claims, wherein, if the state of charge variable (30) lies below the prespecified threshold value, the control device (20) can be adjusted to a generator activation mode by means of the comparison device (32), in which generator activation mode the setpoint mode with the generator braking torque can be defined by means of the control device (20), and, if the state of charge variable (30) lies above the prespecified threshold value, the control device (20) can be adjusted to a drive activation mode by means of the comparison device (32), in which drive activation mode the setpoint mode with the drive torque which is directed against the current vehicle movement direction can be defined by means of the control device (20).

5. Control apparatus (10) according to one of the preceding claims, wherein at least one first sensor signal of a brake travel sensor (66) and/or of a brake force sensor can be received as the prespecification variable (14) and at least one second sensor signal of at least one pressure sensor (98, 100) of the at least one brake circuit (50, 52) can be received as the actual variable (18).

6. Brake system comprising:
an electrical drive and/or generator apparatus (58);
a control apparatus (10) according to one of the preceding claims; and
at least one brake circuit (50, 52) comprising at least one wheel brake cylinder (54a, 54b).

7. Brake system according to Claim 6, wherein the brake system comprises at least two brake circuits (50, 52) each comprising two wheel brake cylinders (54a, 54b) which are associated with a common wheel axle.

8. Brake system according to Claim 7, wherein a generator braking torque and/or a drive torque can be exerted on a front axle of a vehicle by means of the electrical drive and/or generator apparatus (58).

9. Method for operating a brake system which is equipped with an electrical drive and/or generator apparatus (58), comprising the steps of:
ascertaining a prespecification variable (14) relating to a brake pressure in at least one wheel brake cylinder (54a, 54b) of at least one brake circuit (50, 52) of the brake system (S1);
ascertaining an actual variable (18) relating to a pressure in the at least one brake cylinder (50, 52) and/or the brake pressure in the at least one wheel brake cylinder (54a, 54b) of the at least one brake circuit (50, 52) (S2);
defining a setpoint mode of the electrical drive and/or generator apparatus (58) taking into account the ascertained prespecification variable (14) and the ascertained actual variable (18) (S3); and
adjusting the electrical drive and/or generator apparatus (58) to the defined setpoint mode (S4),
wherein a state of charge variable (30) of a battery which is associated with the electrical drive and/or generator apparatus (58) is compared with a prespecified threshold value,
**characterized by** the step that,
if the state of charge variable (30) lies above the prespecified threshold value, an activation signal (36) is output to at least one heating and/or cooling apparatus, and the at least one heating and/or cooling apparatus is adjusted from a first operating mode to a second operating mode with a power consumption level which is increased in relation to the first operating mode by means of the activation signal (36).

10. Method according to Claim 9, wherein the electrical drive and/or generator apparatus (58) is adjusted to a setpoint mode with a generator braking torque.

11. Method according to Claim 9 or 10, wherein the electrical drive and/or generator apparatus (58) is adjusted to a setpoint mode with a drive torque which is directed against a current movement direction of the vehicle comprising the brake system.

## Revendications

1. Dispositif de commande (10) pour un système de freinage équipé d'un dispositif propulseur et/ou générateur électrique (58), comprenant :
un premier appareil récepteur (12) qui est conçu de telle sorte qu'une grandeur par défaut (14) concernant une pression de freinage dans au moins un cylindre de frein de roue (54a, 54b) d'au moins un circuit de frein (50, 52) du système de freinage peut être reçue au moyen du premier appareil récepteur (12) ;
un deuxième appareil récepteur (16) qui est conçu de telle sorte qu'une grandeur réelle (18) concernant une pression dans l'au moins un circuit de frein (50, 52) et/ou la pression de freinage dans l'au moins un cylindre de frein de roue (54a, 54b) de l'au moins un circuit de frein (50, 52) peut être reçue au moyen du deuxième appareil récepteur (16) ; et
un appareil de commande (20) qui est conçu de telle sorte qu'un mode de consigne du dispositif propulseur et/ou générateur électrique (58) peut être défini au moyen de l'appareil de commande (20) en tenant compte de la grandeur par défaut (14) reçue et de la grandeur réelle (18) reçue, et un signal de commande (26) correspondant peut être délivré au dispositif propulseur et/ou générateur électrique (58) de telle sorte que le dispositif propulseur et/ou générateur électrique (58) peut être commandé au moyen du signal de commande (26) dans le mode de consigne défini,
le dispositif de commande (10) comprenant en outre un troisième appareil de réception (28) qui est conçu de telle sorte qu'une grandeur d'état de charge (30) d'une batterie associée au dispositif propulseur et/ou générateur électrique (58) peut être reçue au moyen du troisième appareil de réception (28), et le dispositif de commande (10) comprend en plus un appareil comparateur (32) qui est conçu de telle sorte que la grandeur d'état de charge (30) reçue peut être comparée à une valeur de seuil prédéfinie au moyen de l'appareil comparateur (32),
**caractérisé en ce que**
dans la mesure où la grandeur d'état de charge (30) est supérieure à la valeur de seuil prédéfinie, un signal d'activation (36) peut être délivré à au moins un dispositif de chauffage et/ou de refroidissement au moyen de l'appareil comparateur (32), et l'au moins un dispositif de chauffage et/ou de refroidissement peut être commandé au moyen du signal d'activation (36) d'un premier mode de fonctionnement en un deuxième mode de fonctionnement avec une consommation électrique accrue par rapport au premier mode de fonctionnement.

2. Dispositif de commande (10) selon la revendication 1, un mode de consigne du dispositif propulseur et/ou générateur électrique (58) pouvant en plus être défini au moyen de l'appareil de commande (20) au moins en tenant compte de la grandeur par défaut (14) reçue et de la grandeur réelle (18) reçue, dans lequel un couple de freinage générateur peut être exercé au moyen du dispositif propulseur et/ou générateur électrique (58) sur au moins une roue (56, 60) et/ou au moins un essieu.

3. Dispositif de commande (10) selon la revendication 1 ou 2, un mode de consigne du dispositif propulseur et/ou générateur électrique (58) pouvant en plus être défini au moyen de l'appareil de commande (20) au moins en tenant compte de la grandeur par défaut (14) reçue et de la grandeur réelle (18) reçue, dans lequel un couple de propulsion dirigé à l'opposé d'un sens de déplacement de véhicule actuel du véhicule équipé du système de freinage peut être exercé au moyen du dispositif propulseur et/ou générateur électrique (58) sur l'au moins une roue (56, 60) et/ou l'au moins un essieu.

4. Dispositif de commande (10) selon l'une des revendications précédentes, avec lequel, dans la mesure où la grandeur d'état de charge (30) est inférieure à la valeur de seuil prédéfinie, l'appareil de commande (20) peut être commandé au moyen de l'appareil comparateur (32) dans un mode d'activation de générateur dans lequel le mode de consigne avec le couple de freinage générateur peut être défini au moyen de l'appareil de commande (20) et, dans la mesure où la grandeur d'état de charge (30) est supérieure à la valeur de seuil prédéfinie, l'appareil de commande (20) peut être commandé au moyen de l'appareil comparateur (32) dans un mode d'activation de propulseur dans lequel le mode de consigne avec le couple de propulsion dirigé à l'opposé du sens de déplacement de véhicule actuel peut être défini au moyen de l'appareil de commande (20).

5. Dispositif de commande (10) selon l'une des revendications précédentes, au moins un premier signal de capteur d'un capteur de course de freinage (66) et/ou d'un capteur de force de freinage pouvant être reçu en tant que grandeur par défaut (14) et au moins un deuxième signal de capteur d'au moins un capteur de pression (98, 100) de l'au moins un circuit de frein (50, 52) pouvant être reçu en tant que grandeur réelle (18).

6. Système de freinage comprenant :
un dispositif propulseur et/ou générateur électrique (58) ;
un dispositif de commande (10) selon l'une des revendications précédentes ; et
au moins un circuit de frein (50, 52) pourvu d'au moins un cylindre de frein de roue (54a, 54b).

7. Système de freinage selon la revendication 6, le système de freinage comprenant au moins deux circuits de frein (50, 52) pourvus respectivement de deux cylindres de frein de roue (54a, 54b) associés à un essieu de roues commun.

8. Système de freinage selon la revendication 7, un couple de freinage générateur et/ou un couple de propulsion pouvant être exercés au moyen du dispositif propulseur et/ou générateur électrique (58) sur un essieu avant d'un véhicule.

9. Procédé pour faire fonctionner un système de freinage équipé d'un dispositif propulseur et/ou générateur électrique (58), comprenant les étapes suivantes :
détermination d'une grandeur par défaut (14) concernant une pression de freinage dans au moins un cylindre de frein de roue (54a, 54b) d'au moins un circuit de frein (50, 52) du système de freinage (S1) ;
détermination d'une grandeur réelle (18) concernant une pression dans l'au moins un circuit de frein (50, 52) et/ou la pression de freinage dans l'au moins un cylindre de frein de roue (54a, 54b) de l'au moins un circuit de frein (50, 52) (S2) ;
définition d'un mode de consigne du dispositif propulseur et/ou générateur électrique (58) en tenant compte de la grandeur par défaut (14) déterminée et de la grandeur réelle (18) déterminée (S3) ; et
commande du dispositif propulseur et/ou générateur électrique (58) dans le mode de consigne défini (S4),
une grandeur d'état de charge (30) d'une batterie associée au dispositif propulseur et/ou générateur électrique (58) étant comparée à une valeur de seuil prédéfinie,
**caractérisé par** l'étape suivante :
dans la mesure où la grandeur d'état de charge (30) est supérieure à la valeur de seuil prédéfinie, un signal d'activation (36) est délivré à au moins un dispositif de chauffage et/ou de refroidissement, et l'au moins un dispositif de chauffage et/ou de refroidissement est commandé au moyen du signal d'activation (36) d'un premier mode de fonctionnement en un deuxième mode de fonctionnement avec une consommation électrique accrue par rapport au premier mode de fonctionnement.

10. Procédé selon la revendication 9, le dispositif propulseur et/ou générateur électrique (58) étant commandé dans un mode de consigne avec un couple de freinage générateur.

11. Procédé selon la revendication 9 ou 10, le dispositif propulseur et/ou générateur électrique (58) étant commandé dans un mode de consigne avec un couple de propulsion dirigé à l'opposé d'un sens de déplacement de véhicule actuel du véhicule équipé du système de freinage.
